(19) Europäisches Patentamt
European Patent Office
Office européen des brevets

(11) **EP 3 316 011 A1**

(12) **EUROPEAN PATENT APPLICATION**

(43) Date of publication:
**02.05.2018 Bulletin 2018/18**

(51) Int Cl.:
**G02B 6/12** *(2006.01)*       **G02B 6/293** *(2006.01)*
**G02B 6/122** *(2006.01)*

(21) Application number: **17199048.4**

(22) Date of filing: **27.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.11.2016  US 201662415962 P**
**13.12.2016  US 201615377689**

(71) Applicant: **Honeywell International Inc.**
**Morris Plains, NJ 07950 (US)**

(72) Inventors:
• PUCKETT, Matthew Wade
  **Morris Plains, NJ 07950 (US)**
• WU, Jianfeng
  **Morris Plains, NJ 07950 (US)**
• NELSON, Karl D.
  **Morris Plains, NJ 07950 (US)**

(74) Representative: **Houghton, Mark Phillip**
**Patent Outsourcing Limited**
**1 King Street**
**Bakewell, Derbyshire DE45 1DZ (GB)**

(54) **APPARATUS AND METHOD FOR A LOW LOSS, HIGH Q RESONATOR**

(57)     An optical resonator system is provided. The optical resonator comprises a ring resonator portion; wherein the ring resonator portion is configured to be proximate to an optical waveguide, and to receive a first single mode, optical signal from the optical waveguide; a disc resonator portion adiabatically coupled to the ring resonator portion; and wherein the disc resonator portion is configured to receive a second single mode, optical signal through the adiabatic coupling with ring resonator portion.

**100**

**FIG. 1**

**Description**

CROSS-REFERENCED TO RELATED APPLICATIONS

This application claims the benefit of provisional U.S. Patent Application Ser. No. 62/415,962 filed November 1, 2016, which is incorporated herein by reference in its entirety.

BACKGROUND

Optical resonators may be used to create optical delay lines, optical frequency comb generators, and electro-optic modulators and switches. Optical resonators having a high Q, or quality factor, are desirable. For example, high Q optical resonators can be used to create optical delay lines with lower insertion loss, optical frequency comb generators that require lower power optical signals to create frequency combs, and electro-optic modulators and switches with lower insertion loss and requiring lower energy to operate the electro-optic modulators and switches.

Optical disc resonators have a high Q. Optical disc resonators, however, undesirably dissipate optical energy which undermines the performance improvements in applications of optical resonators described above.

Optical disc resonators dissipate optical energy because they transfer optical energy from a single optical mode to additional higher order optical modes. The energy transferred to the higher order optical modes is effectively dissipated, reducing the Q factor of optical disc resonators. Therefore, there is a need for a lower loss, higher Q optical resonator.

SUMMARY

An optical resonator system is provided. The optical resonator comprises a ring resonator portion; wherein the ring resonator portion is configured to be proximate to an optical waveguide, and to receive a first single mode, optical signal from the optical waveguide; a disc resonator portion adiabatically coupled to the ring resonator portion; and wherein the disc resonator portion is configured to receive a second single mode, optical signal through the adiabatic coupling with ring resonator portion.

DRAWINGS

Understanding that the drawings depict only exemplary embodiments and are not therefore to be considered limiting in scope, the exemplary embodiments will be described with additional specificity and detail through the use of the accompanying drawings, in which:

Figure 1 illustrates a plan view of an exemplary optical crescent resonator system;
Figure 2 illustrates an exemplary method of operation of the crescent resonator; and
Figure 3 illustrates an exemplary method of making the crescent resonator.

In accordance with common practice, the various described features are not drawn to scale but are drawn to emphasize specific features relevant to the exemplary embodiments. Reference characters denote like elements throughout figures and text.

DETAILED DESCRIPTION

In the following detailed description, reference is made to the accompanying drawings that form a part hereof, and in which is shown by way of illustration specific illustrative embodiments. However, it is to be understood that other embodiments may be utilized and that structural, mechanical, and electrical changes may be made. Furthermore, the method presented in the drawing figures and the specification is not to be construed as limiting the order in which the individual steps may be performed. The following detailed description is, therefore, not to be taken in a limiting sense.

A crescent resonator may be used to overcome the above referenced problem. Embodiments of the optical crescent resonator have at least one advantage. The optical signal in the crescent resonator remains in one optical mode at any time, reducing loss and increasing the Q factor of the crescent resonator.

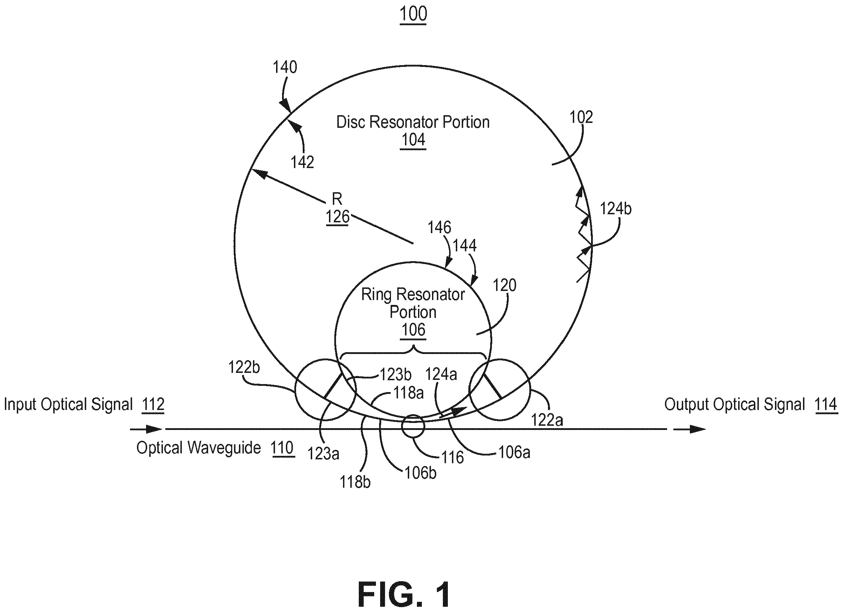

Figure 1 illustrates a plan view of an exemplary optical crescent resonator system 100. In one embodiment, the resonator system 100 comprises an optical waveguide 110 coupled to a crescent resonator 102. In another embodiment, the optical waveguide 110 and the crescent resonator system 100 are monolithically formed, *e.g.,* in or on silicon. In a further embodiment, as is subsequently illustrated, the optical waveguide 110 and crescent resonator 102 may be formed with silicon or silicon nitride cores surrounded by silicon dioxide cladding. In yet another embodiment, the crescent resonator 102 may be formed from lithium niobate, *e.g.* when creating an electro-optical modulator or switch; lithium niobate has high second order non-linearities. Optical waveguide 110 shall include any type of integrated, fiber or other optical waveguide structure. An integrated optical waveguide includes an optical waveguide fabricated on a substrate, *e.g.* with the crescent resonator 102.

In one embodiment, the crescent resonator 102 comprises a ring resonator portion 106 and a disc resonator portion 104 separated, at least in part, by a non-waveguide portion 120. In another embodiment, the narrowest portion 116 of the ring resonator portion 106 is positioned proximate, *e.g.* adjacent, to the optical waveguide 110. The ring resonator portion 106 is configured to receive an optical signal, *e.g.* a single mode optical signal from the optical waveguide 110.

In one embodiment, the crescent resonator 102 includes the ring resonator portion 106 that adiabatically transitions to the disc resonator portion 104, and then adiabatically transitions back to the ring resonator portion 106. Adiabatic transition means that the optical signal in the crescent resonator 102 is transformed from one single mode to another single mode with no or substantially no loss of energy, *i.e.* to other modes.

More specifically, the adiabatic transitions permit the creation of optical signals having only one optical mode. The single optical mode in the ring resonator portion 106 transitions to a single, lower order whispering gallery mode in the disc resonator portion 104, and vice versa. As a result, optical energy is not dissipated in higher order modes in the disc resonator portion 104 which would diminish the Q factor of the crescent resonator 102. The creation of higher order modes in disc resonators is why their Q factor is diminished.

In the single whispering gallery mode, the optical signal 124b only reflects off one sidewall, *i.e.* an inner surface 142 of an outer sidewall 140, of the disc resonator portion 104 as further described below. The disc resonator portion 104 has a circular or a substantially circular periphery with a substantially solid interior except for the non-waveguide region 120 further discussed below. Unlike the ring resonator portion 106, the disc resonator 104 is capable of supporting a whispering gallery mode with no or substantially no electric field of the optical signal being present on an inner surface 144 of an inner sidewall of the disc resonator portion 104.

In one embodiment, the disc resonator 104 supports an optical signal having a single transverse mode where an integral of the electric field of the optical signal taken along the inner surface 144 of an inner sidewall 146, if the inner sidewall 146 exists, is less than one tenth of a percent of a corresponding integral of electric field of the optical signal taken along the inner surface 142 of the outer sidewall 140.

The ring resonator portion 106 comprises a first portion 106a and a second portion 106b. The ring resonator 106 has an inner sidewall 118a and an outer sidewall 118b. The ring resonator portion 106 is coupled to the disc resonator portion 106 by a first adiabatic transition region 122a and a second adiabatic transition region 122b.

However, the ring resonator portion 106 can be lossy because the optical signal 124a in the ring resonator portion 106 is bounded by two sidewalls which confine the optical signal 124a. Therefore, the optical signal in the ring resonator portion 106 is promptly and adiabatically transitioned into the single, lower order whispering gallery mode in the disc resonator portion 104.

The adiabatic transitions in the crescent resonator 102 occur respectively in a first adiabatic transition region 122a and a second adiabatic transition region 122b. The adiabatic transition is a gradual, rather than, *e.g.*, a step transition, permitting an optical signal to remain in a single mode at any given time, even though the optical mode may transition between one transverse mode to another single transverse mode during the transition.

Because the optical signal remains in only one mode at any given time, energy is not lost to other modes, *e.g.* higher order modes. This permits the crescent resonator 102 to maintain low loss, and thus a high Q factor. The first adiabatic transition region 122a and the second adiabatic transition region 122b are formed by gradually expanding the width of the ring resonator portion 106 in a curved manner so that there is a graceful transition between the shapes of the ring resonator portion 106 and the disc resonator portion 104. In one embodiment, each of the first adiabatic transition region 122a and the second adiabatic transition region 122b have an outer sidewall 123a and an inner sidewall 123b. In another embodiment, a rate of curvature of the inner sidewall 123b is greater than the rate of curvature of the outer sidewall 123 a so that the width of the first adiabatic transition region 122a and the second adiabatic transition region 122b gradually expands prior to connecting to the disc resonator portion 104.

In one embodiment, inner sidewalls 118a and outer sidewalls 118b of the ring resonator 106 connect to the inner sidewalls 123a and the outer sidewalls 123b of the first adiabatic transition region 122a and the second adiabatic transition region 122b in a continuous manner, *i.e.* without a discontinuity, as illustrated in Figure 1. In another embodiment, the outer sidewalls 123a of the first adiabatic transition region 122a and the second adiabatic transition region 122b connect to the outer sidewall 140 of the disc resonator portion 104 in a continuous manner, *i.e.* without a discontinuity, as illustrated in Figure 1.

The non-waveguide region 120 defines the inner sidewall of the ring resonator portion 106, an inner sidewall 146 of the disc resonator portion 104, and the inner sidewalls 123b of the first adiabatic transition region 122a and the second adiabatic transition region 122b. The cross-sectional dimensions, *e.g.* cross-sectional area, illustrated by the plan view in Figure 1, of the non-waveguide region 120 are sufficiently small so that only a single whispering gallery mode optical signal is created in the disc resonator portion 104. In one embodiment, the cross-section, as illustrated in Figure 1, of the non-waveguide region 120 is circular or substantially circular.

The resonant wavelengths of the crescent resonator 102 are:

$$\lambda = [(2 * \pi * R) * n_{eff}] / m;$$

where m is a mode number; $n_{eff}$ is the effective refractive index of refraction of the mode; and R is the radius 126 of the crescent resonator 102. There are different resonances for each longitudinal mode. The free spectral range, or spacing between resonances, decreases as the radius 126 increases. In one embodiment, due to its low loss, the Q factor of the crescent resonator is greater than 10 million.

The optical waveguide 110, ring resonator portion 106, and disc resonator portion 104 are formed by optical waveguide, as will be subsequently discussed. The non-waveguide region 120 is formed to be devoid of optical waveguide, as will be subsequently explained.

In one embodiment, an input optical signal 112 travels through the optical waveguide 110 towards the crescent resonator 102. To the extent that a portion of the input optical signal 112 is not coupled into the crescent resonator 102, it passes the crescent resonator 102 and becomes the output optical signal 114.

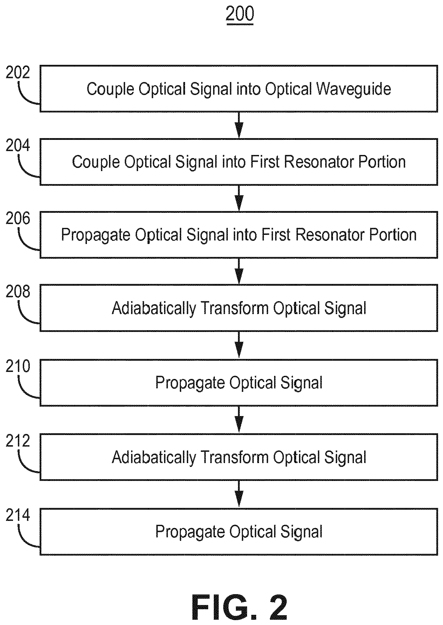

Figure 2 illustrates an exemplary method 200 of operation of the crescent resonator 102. In block 202, couple an optical signal into the optical waveguide 110 to create an input optical signal 112 in the optical waveguide 110. In one embodiment, the optical signal is coupled into the optical waveguide 110 through a lensed tapered fiber or an ultra-high-numerical-aperture fiber.

In block 204, couple the input optical signal in a first mode, *e.g.* from an optical waveguide 110, into a first resonator portion, *e.g.* into the ring resonator portion 104 of the crescent resonator 102, creating an optical signal in the first resonator portion, having a second mode. In one embodiment, the input optical signal 112 is coupled into the first resonator portion at the narrowest portion 116 between the first resonator portion and the optical waveguide 110. There, an evanescent field of the mode of input optical signal 112 in the optical waveguide 110 transitions to the mode supported by the first resonator portion, and generates an optical signal 124a of a second mode in the first resonator portion, *e.g.* the ring resonator portion 106.

In block 206, propagate, in the first resonator portion, the optical signal 124a in the second mode. In one embodiment, the optical signal 124a in the second mode is propagated, in a first half 106a of the ring resonator portion 106, between two curved surfaces, *i.e.* an inner surface 118a and an outer surface 118b of the ring resonator portion 106.

In block 208, adiabatically transform the optical signal from the second mode to a third mode. In one embodiment, in a first adiabatic transition region 122a, the mode of the optical signal adiabatically transitions to a third mode, *e.g.* a whispering gallery mode such as a low order whispering gallery mode.

In block 210, propagate, in the second resonator portion, *e.g.* the disc resonator portion 104, the optical signal in the third mode. In one embodiment, returning to Figure 1, the disc resonator portion 104 is configured to propagate the optical signal 124b in a whispering gallery mode, *e.g.* of the lowest mode, along the inner surface 142 of the outer sidewall 140 of the disc resonator portion 104. Because a disc resonator portion 104 is used, the single mode, optical signal in the whispering gallery mode in the disc resonator portion 104 is in contact with only one surface of one sidewall, *i.e.* inner surface 142 of the outer sidewall 140 of the disc resonator portion. This significantly reduces losses of the crescent resonator 102 in the disc resonator portion 104. The mode in the disc resonator portion 104 has a higher modal index of refraction then the mode in the ring resonator portion 106.

In block 212, adiabatically transform the optical signal from the third mode to another mode. In one embodiment, upon reaching a second adiabatic transition region 122b, the mode of the optical signal transitions from the whisper gallery mode to the second mode originally generated in the first resonator portion, *e.g.* the ring resonator portion 106.

In block 214, propagate, in the first resonator portion, the optical signal in the other mode, *e.g.* second mode. In one embodiment, returning to Figure 1, the second half 106b, and then the first half 106, of the ring resonator portion 106 are configured to propagate an optical signal 124a in this single mode between two curved surfaces to the first adiabatic transition region 122a. In another embodiment, repeat blocks 206 through 214, with the optical energy being retained in the crescent resonator 102. In a further embodiment, one or more high Q nulls or notches are formed in the optical wave guide at corresponding resonance frequencies in the crescent resonator 102.

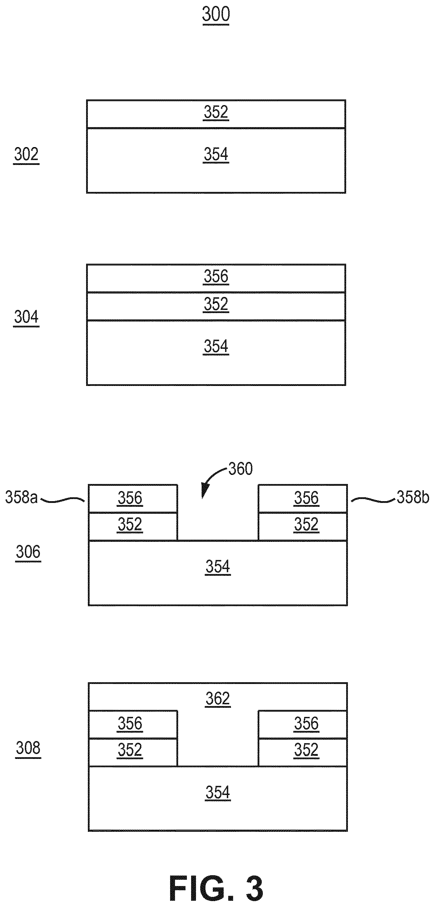

Figure 3 illustrates an exemplary method 300 of making the crescent resonator 102. In block 302, a first refractive material 352, *e.g.* a lower cladding, having a relatively low index of refraction, is formed on a substrate 354. In one embodiment, the substrate 354 is silicon. In another embodiment, the first refractive material is a silicon dioxide, *e.g.* which is thermally grown. In a further embodiment, the silicon dioxide has an index of refraction of 1.444. In yet another embodiment is the substrate 354 is three hundred microns thick. In a yet a further embodiment, the silicon dioxide is from three to fifteen microns thick. In another embodiment, the thickness of the silicon dioxide depends on the thickness of a second refractive layer 356.

In block 304, the second refractive material 356, *e.g.* a core, having a relatively high index of refraction, is formed on the first refractive material 352. In one embodiment, the second refractive material 356 is silicon nitride, *e.g.* formed by low pressure or plasma enhanced chemical vapor deposition with silane and ammonia precursor gases. In another embodiment, the thickness of the silicon nitride is three hundred nanometers. In a further embodiment, the index of refraction of the silicon nitride is 1.97.

In block 306, the first refractive material layer 352 and the second refractive material layer 356 are patterned to form at least two layers of the optical waveguide 110, ring resonator portion 106, the first adiabatic transition region 122a, the second adiabatic transition region 122b, and the disc resonator portion 104 as illustrated by regions 358a, 358b. Such patterning also forms the non-wave guide region 120 in the crescent resonator 102. The sidewalls of the non-waveguide region 120, optical waveguide 110, ring resonator portion 106, the first adiabatic transition region 122a, the second adiabatic transition region 122b, and disc resonator portion 104 are defined by regions 360 where material was removed. In one embodiment, such patterning is accomplished by:

(a) depositing photoresist on the second refractive material layer 356;
(b) developing the photoresist, over or covering regions to be removed, with electron beam or photolithography;
(c) removing the developed photoresist; and
(d) removing first refractive material layer 352 and the second refractive material layer 356, that are not covered by photoresist, with reactive ion etching, *e.g.* using $CHF_3$ and $N_2$ etch chemistries.

In one embodiment, a rate of curvature of the inner sidewall 123b of the at least two layers of the first adiabatic transition region 122a and second adiabatic transition region 122b is greater than the rate of curvature of the outer sidewall 123a of the first adiabatic transition region 122a and second adiabatic transition region 122b so that the width of the at least two layers of the first adiabatic transition region 122a and second adiabatic transition region 122b gradually expands prior to the outer sidewalls 123a connecting to an outer sidewall 140 of the of the at least two layers of the disc resonator portion 104. In one embodiment, inner sidewalls 118a and outer sidewalls 118b of the at least two layers of the ring resonator 106 connect to the inner sidewalls 123a and the outer sidewalls 123b of the at least two layers of the first adiabatic transition region 122a and the second adiabatic transition region 122b in a continuous manner, *i.e.* without a discontinuity, as illustrated in Figure 1. In another embodiment, the outer sidewalls 123a of the at least two layers of the first adiabatic transition region 122a and the second adiabatic transition region 122b connect to the outer sidewall 140 of the at least two layers of the disc resonator portion 104 in a continuous manner, *i.e.* without a discontinuity, as illustrated in Figure 1.

In block 308, a third refractive material 362, *e.g.* an upper cladding, having a relatively low index of refraction is formed over all or a portion of the second refractive material layer 356 and the substrate 354. The index of refraction of the second refractive material 356 is relatively larger than the index of refractions of the first refractive material 352 and the third refractive material 362. In one embodiment, the third refractive material is also silicon dioxide having a refractive index of 1.444. In another embodiment, the silicon dioxide is from three to fifteen microns thick. In a further embodiment, the thickness of the silicon dioxide depends on the thickness of a second refractive layer 356. In yet another embodiment, the silicon nitride, of the third refractive material 362, is formed by plasma enhanced or low pressure chemical vapor deposition with silane and nitrous oxide precursor gases.

Terms of relative position as used in this application are defined based on a plane parallel to, or in the case of the term coplanar - the same plane as, the conventional plane or working surface of a layer, wafer, or substrate, regardless of orientation. The term "horizontal" or "lateral" as used in this application are defined as a plane parallel to the conventional plane or working surface of a layer, wafer, or substrate, regardless of orientation. The term "vertical" refers to a direction perpendicular to the horizontal. Terms such as "on," "side" (as in "sidewall"), "higher," "lower," "over," "top," and "under" are defined with respect to the conventional plane or working surface being on the top surface of a layer, wafer, or substrate, regardless of orientation. The term "coplanar" as used in this application is defined as a plane in the same plane as the conventional plane or working surface of a layer, wafer, or substrate, regardless of orientation.

Example 1 includes an optical resonator, comprising: a ring resonator portion; wherein the ring resonator portion is configured to be proximate to an optical waveguide, and to receive a first single mode, optical signal from the optical waveguide; a disc resonator portion adiabatically coupled to the ring resonator portion; and wherein the disc resonator portion is configured to receive a second single mode, optical signal through the adiabatic coupling with ring resonator portion.

Example 2 includes the optical resonator of Example 1, further comprising a first adiabatic transition region and a second adiabatic transition region; wherein the ring resonator portion comprises a first portion and a second portion; wherein the first adiabatic transition region couples the first portion of the ring resonator portion to the disc resonator portion; and wherein the second adiabatic transition region couples the second portion of the ring resonator portion to the disc resonator portion.

Example 3 includes the optical resonator of Example 2, wherein the first adiabatic transition region and the second adiabatic transition region each have an inner sidewall and an outer sidewall; wherein for each of the first and the second adiabatic transition regions, a rate of curvature of the inner sidewall is greater than the rate of curvature of the outer sidewall so that the width of the first and second adiabatic transition regions gradually expands prior to the outer sidewalls connecting to an outer sidewall of the disc resonator portion; and wherein the outer sidewalls of the first and the second adiabatic transition regions connect to the outer sidewall of the disc resonator portion in a continuous manner.

Example 4 includes the optical resonator of any of Examples 1-3, wherein the ring resonator portion has a first sidewall and a second sidewall each of which is configured to confine the first single mode, optical signal.

Example 5 includes the optical resonator of any of Examples 1-4, further comprising an optical waveguide; wherein the optical wave guide is proximate to the ring resonator portion and configured to couple an optical signal to the ring resonator portion.

Example 6 includes the optical resonator of any of Examples 1-5, wherein the optical resonator has one or more notches with a Q greater than ten million at one or more resonant frequencies.

Example 7 includes the optical resonator of any of Examples 1-6, wherein the disc resonator portion comprises: an inner sidewall having an inner surface; and an outer sidewall having an inner sidewall; and wherein the integral of the electric field of the optical signal taken along the inner surface of the inner sidewall is less than one tenth of a percent of the corresponding integral of the electric field of the optical signal taken along the inner surface of the outer sidewall.

Example 8 includes the optical resonator of any of Examples 1-7, wherein the second single mode, optical signal is a single whispering gallery mode, optical signal.

Example 9 includes the optical resonator of any of Examples 1-8, wherein the ring resonator portion and the disc resonator portion each comprise a core having an index of refraction equal to or greater than 1.97 between two cladding layers having an index of refraction equal to or less than 1. 444.

Example 10 includes the optical resonator of Example 9, wherein the core is silicon nitride and each cladding layer is silicon dioxide.

Example 11 includes a method, comprising: coupling an optical signal into a first resonator portion; propagating, in the first resonator portion, the optical signal having a single, first mode; adiabatically transforming the optical signal to a single, second mode; propagating, in a second resonator portion, the optical signal having the single, second mode; and adiabatically transforming the optical signal to the single, first mode.

Example 12 includes the method of Example 11, further comprising coupling the optical signal into an optical waveguide; and wherein coupling the optical signal into the first resonator portion comprises coupling the optical signal from the optical waveguide to the first resonator portion.

Example 13 includes the method of any of Example 11-12, wherein propagating, in the first resonator portion, the optical signal having the single, first mode comprises propagating, in a ring resonator portion between two curved sidewalls the optical signal having the single, first mode.

Example 14 includes the method of any of Examples 11-13, wherein propagating, in a second resonator portion, the optical signal having the single, second mode comprises propagating, in a disc resonator portion, the optical signal in a whispering gallery mode.

Example 15 includes the method of any of Examples 11-14, further comprising creating at least one notch with a Q greater than ten million at one or more resonant frequencies.

Example 16 includes a method of manufacturing a crescent resonator, comprising: forming a first refractive material, having a relatively low index of refraction, on a substrate; forming a second refractive material, having a relatively high index of refraction, on the first refractive material; patterning the first refractive material layer and the second refractive material layer to form at least two layers of a ring resonator portion, a disc resonator portion, a first adiabatic transition region, and a second adiabatic transition region; wherein the at least two layers of the first adiabatic transition region and the at least two layers of the second adiabatic transition region each have an inner sidewall and an outer sidewall; wherein the at least two layers of the ring resonator portion has an inner sidewall and an outer sidewall; wherein the inner sidewall and the outer sidewall of the at least two layers of the ring resonator portion respectively connect in a continuous manner to the inner sidewalls and the outer sidewalls of the first and the second adiabatic transition regions; wherein rates of curvature of the inner sidewalls of the first and the second adiabatic transition regions are greater than rates of curvature of the outer sidewall of the at least two layers of the first and the second adiabatic transition regions so that the width of the at least two layers of the first and second adiabatic transition regions gradually expands prior to the outer sidewalls of the at least two layers of the first and second adiabatic transition regions connecting in a continuous manner to an outer sidewall of the of the at least two layers of the disc resonator portion; and forming a third refractive material, having a relatively low index of refraction, over all or a portion of the second refractive material layer and the substrate.

Example 17 includes the method of Example 16 wherein forming the first refractive material, having the relatively low index of refraction, on the substrate comprises forming silicon dioxide by thermal oxidation.

Example 18 includes the method of any of Examples 16-17, wherein forming a second refractive material, having the relatively high index of refraction, on the first refractive material comprises forming silicon nitride by low pressure or plasma enhanced chemical vapor deposition with silane and ammonia precursor gases.

Example 19 includes the method of any of Examples 16-18, wherein forming the third refractive material, having the relatively low index of refraction, over all or the portion of the second refractive material layer and the substrate comprises forming silicon dioxide by plasma enhanced or low pressure chemical vapor deposition with silane and nitrous oxide precursor gases.

Example 20 includes the method of any of Examples 16-19, wherein patterning the first refractive material layer and the second refractive material layer to form the at least two layers of a ring resonator portion, a disc resonator portion, a first adiabatic transition region, and a second adiabatic transition region comprises: depositing photoresist on the second refractive material layer; developing the photoresist covering regions to be removed; removing the developed photoresist; and removing first refractive material layer and the second refractive material layer, that are not covered by photoresist.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

**Claims**

1. An optical resonator, comprising:

   a ring resonator portion (106);
   wherein the ring resonator portion (106) is configured to be proximate to an optical waveguide (110), and to receive a first single mode, optical signal from the optical waveguide;
   a disc resonator portion (104) adiabatically coupled to the ring resonator portion (106); and
   wherein the disc resonator portion (104) is configured to receive a second single mode, optical signal through the adiabatic coupling with ring resonator portion (106).

2. The optical resonator of claim 1, further comprising a first adiabatic transition region (122a) and a second adiabatic transition region (122b);
   wherein the ring resonator portion (106) comprises a first portion (106a) and a second portion (106b) ;
   wherein the first adiabatic transition region (122a) couples the first portion of the ring resonator portion (106a) to the disc resonator portion (104) ; and
   wherein the second adiabatic transition region (122b) couples the second portion of the ring resonator portion (106b) to the disc resonator portion (104).

3. The optical resonator of claim 2, wherein the first adiabatic transition region (122a) and the second adiabatic transition region (122a) each have an inner sidewall (123a) and an outer sidewall (123b);
   wherein for each of the first and the second adiabatic transition regions (122a, 122b), a rate of curvature of the inner sidewall (123a) is greater than the rate of curvature of the outer sidewall (123b) so that the width of the first and second adiabatic transition regions (122a, 122b) gradually expands prior to the outer sidewalls (123b) connecting to an outer sidewall (140) of the disc resonator portion (104); and
   wherein the outer sidewalls (123b) of the first and the second adiabatic transition regions (122a, 122b) connect to the outer sidewall (140) of the disc resonator portion (104) in a continuous manner.

4. The optical resonator of claim 1, wherein the ring resonator portion (106) has a first sidewall (118a)
   and a second sidewall (118b) each of which is configured to confine the first single mode, optical signal.

5. The optical resonator of claim 1, further comprising an optical waveguide (110); wherein the optical wave guide (110) is proximate to the ring resonator portion (106) and configured to couple an optical signal to the ring resonator portion (106).

6. The optical resonator of claim 1, wherein the second single mode, optical signal is a single whispering gallery mode, optical signal.

7. A method, comprising:

   coupling an optical signal into a first resonator portion;
   propagating, in the first resonator portion, the optical signal having a single, first mode;
   adiabatically transforming the optical signal to a single, second mode;
   propagating, in a second resonator portion, the optical signal having the single, second mode; and
   adiabatically transforming the optical signal to the single, first mode.

8. The method of claim 11, further comprising coupling the optical signal into an optical waveguide (110); and
   wherein coupling the optical signal into the first resonator portion comprises coupling the optical signal from the optical waveguide (110) to the first resonator portion.

9. The method of claim of claim 11, wherein propagating, in the first resonator portion, the optical signal having the single, first mode comprises propagating, in a ring resonator portion (106) between two curved sidewalls (118a, 118b) the optical signal having the single, first mode.

10. The method of claim 11, wherein propagating, in a second resonator portion, the optical signal having the single, second mode comprises propagating, in a disc resonator portion (104), the optical signal in a whispering gallery mode.

FIG. 1

<u>200</u>

202 — Couple Optical Signal into Optical Waveguide

204 — Couple Optical Signal into First Resonator Portion

206 — Propagate Optical Signal into First Resonator Portion

208 — Adiabatically Transform Optical Signal

210 — Propagate Optical Signal

212 — Adiabatically Transform Optical Signal

214 — Propagate Optical Signal

# FIG. 2

300

302

352

354

304

356

352

354

360

358a

356

352

306

354

358b

356

352

308

362

356

352

356

352

354

# FIG. 3

Europäisches
Patentamt

European
Patent Office

Office européen
des brevets

## EUROPEAN SEARCH REPORT

Application Number

EP 17 19 9048

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XINBAI LI ET AL: "Low loss, high-speed single-mode half-disk resonator", OPTICS LETTERS, vol. 39, no. 13, 20 June 2014 (2014-06-20), page 3810, XP055458599, ISSN: 0146-9592, DOI: 10.1364/OL.39.003810 * the whole document * | 1-10 | INV. G02B6/12 G02B6/293 ADD. G02B6/122 |
| X | US 7 941 014 B1 (WATTS MICHAEL R [US] ET AL) 10 May 2011 (2011-05-10) * column 5, lines 40-47 * * column 5, line 62 - column 6, line 3; figure 1 * | 1-10 | |

TECHNICAL FIELDS SEARCHED (IPC)

G02B

The present search report has been drawn up for all claims

| Place of search | Date of completion of the search | Examiner |
|---|---|---|
| The Hague | 13 March 2018 | Kapsalis, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 316 011 A1**

## ANNEX TO THE EUROPEAN SEARCH REPORT
## ON EUROPEAN PATENT APPLICATION NO.

EP 17 19 9048

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2018

| Patent document cited in search report | Publication date | Patent family member(s) | Publication date |
|---|---|---|---|
| US 7941014 B1 | 10-05-2011 | NONE | |

EPO FORM P0459

For more details about this annex : see Official Journal of the European Patent Office, No. 12/82

12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62415962 A